# EUROPEAN PATENT APPLICATION

(11) **EP 4 553 256 A1**
(43) Date of publication of application: **14.05.2025**
(21) Application number: 24799473.4
(22) Date of filing: 02.08.2024
(51) Int. Cl.: E04H 12/00, E04H 12/24, E04H 12/18, H02G 7/00, H02G 7/05, H02G 7/04, H02G 7/02, H01B 17/16, H01B 17/38

(54) **POWER TRANSMISSION TOWER**

(30) Priority: 25.09.2023 CN 202311243640; 25.07.2024 CN 202421784178 U
(71) Applicant: Shanghai Shemar Power Engineering Co., Ltd., Shanghai 200050 (CN)
(72) Inventor: WANG, Xinlong, Shanghai 200050 (CN); LI, Yanlin, Shanghai 200050 (CN); WANG, Chen, Shanghai 200050 (CN)
(74) Representative: Arnold & Siedsma
(86) International application number: PCT/CN2024/109415
(87) International publication number: WO 2025/066543

(57) **Abstract**

The present application provides a transmission tower, including a tower body and a composite crossarm arranged on the tower body, the composite crossarm includes a post insulator, a suspension insulator, and a node fitting, the post insulator has a first end connected to the tower body and a second end, the suspension insulator has a first end connected to the tower body and a second end, the second end of the post insulator and the second end of the suspension insulator are connected together by the node fitting, and the node fitting includes: a first link fitting and a second link fitting; and two wire attaching fittings connected at two opposite ends of the second link fitting respectively, the first link fitting is connected to the second link fitting through one of the two wire attaching fittings, and the two wire attaching fittings are configured to attach conductors; the post insulator is connected to the first link fitting, and the suspension insulator is connected to the first link fitting or the second link fitting. The above design can improve a bearing capacity of the node fitting and reduce a manufacturing cost of the transmission tower.

## Description

### TECHNICAL FIELD

The present application relates to the field of power transmission technologies, and in particular, to a transmission tower.

### BACKGROUND

In a transmission tower, a node fitting is generally configured to connect an insulator and attach a conductor. However, the existing transmission tower has the problem that the node fitting has a weak load-bearing capacity on the one hand, and on the other hand, design redundancy leads to a large wind load, thus wasting a manufacturing cost.

### SUMMARY

In view of this, the present application provides a transmission tower, which improves a load-bearing capacity of a node fitting and saves a manufacturing cost.

In order to solve the above problems, the present application provides a transmission tower, including a tower body and a composite crossarm arranged on the tower body, the composite crossarm includes a post insulator, a suspension insulator, and a node fitting, the post insulator has a first end connected to the tower body and a second end, the suspension insulator has a first end connected to the tower body and a second end, the second end of the post insulator and the second end of the suspension insulator are connected together by the node fitting, and the node fitting includes: a first link fitting and a second link fitting; and two wire attaching fittings connected at two opposite ends of the second link fitting respectively, the first link fitting is connected to the second link fitting through one of the two wire attaching fittings, and the two wire attaching fittings are configured to attach conductors; the post insulator is connected to the first link fitting, and the suspension insulator is connected to the first link fitting or the second link fitting.

By integrating the two wire attaching fittings to the node fitting, an vertical spacing of the transmission tower can be reduced, an overall size of the transmission tower can be compressed, a wind load of the transmission tower can be reduced, and the manufacturing cost can be reduced.

The wire attaching fitting includes a wire attaching flange cylinder and a wire attaching portion, the wire attaching portion is arranged on a periphery of the wire attaching flange cylinder and connected to the wire attaching flange cylinder, and central axes of the wire attaching flange cylinders of the two wire attaching fittings are located in a same straight line.

The wire attaching fitting includes two wire attaching portions, the two wire attaching portions are distributed on two sides of the wire attaching flange cylinder along an extension direction of the conductor, the conductors located on the two sides of the wire attaching flange cylinder are connected to the two wire attaching portions respectively, and meanwhile, a jumper is electrically connected to the conductors located on the two sides of the wire attaching flange cylinder.

The wire attaching portion includes: a wire attaching shaft rotatably connected to the wire attaching flange cylinder; and a wire attaching plate connected to the wire attaching shaft and provided with a wire attaching hole, a central axis of the wire attaching hole being perpendicular to an extension direction of the wire attaching shaft.

The extension direction of the wire attaching shaft is perpendicular to an extension direction of the wire attaching flange cylinder, the wire attaching portion further includes: two support plates spaced on a periphery of the wire attaching flange cylinder along a direction perpendicular to the extension direction of the wire attaching flange cylinder and connected to the wire attaching flange cylinder, and the wire attaching shaft is arranged between the two support plates and rotatably connected to the two support plates.

The wire attaching fitting further includes: two sealing plates, the two sealing plates seal two ends of the wire attaching flange cylinder respectively, and in a radial direction of the wire attaching flange cylinder, the two sealing plates protrude from the wire attaching flange cylinder, and meanwhile, the wire attaching portion is located between the two sealing plates, and the sealing plate is provided with a first connecting hole located on the periphery of the wire attaching flange cylinder.

The extension direction of the wire attaching shaft is parallel to an extension direction of the wire attaching flange cylinder, and two ends of the wire attaching shaft are rotatably connected to the two sealing plates.

The number of the post insulators is two, and the first link fitting includes: two first flange cylinders, a first end of one of the two first flange cylinders is connected to a first end of another of the two first flange cylinders, the two first ends of the two first flange cylinders connected together are connected to one of the wire attaching fittings, and second ends of the two first flange cylinders are connected to the second ends of the two post insulators respectively; and a first connecting plate connected to outer circumference surfaces of the two first flange cylinders.

The second link fitting includes: a second flange cylinder having an end connected to one wire attaching fitting and the other end connected to the other wire attaching fitting; and a second connecting plate connected to an outer circumference surface of the second flange cylinder.

The transmission tower further includes: a first hinged member for connecting the first end of the post insulator to the tower body, so that the post insulator is rotatable relative to the tower body; and a second hinged member for connecting the first end of the suspension insulator to the tower body, so that the suspension insulator is rotatable relative to the tower body.

The tower body includes: a tower main body; a first support frame; and a second support frame. The first support frame and the second support frame are convexly arranged on a same side wall of the tower main body, the first support frame is connected to the first end of the post insulator, and the second support frame is connected to the first end of the suspension insulator.

The transmission tower includes at least one arcing device, each arcing device includes an arcing ring and an arcing end, and the arcing ring is provided with a notch, so that the arcing ring has two end portions, the arcing end is located at one of the end portions of the arcing ring, and the arcing end bends in a direction away from the arcing ring.

The node fitting further includes two fixing plates inserted above and below the first flange cylinder respectively, and construction holes are formed in the fixing plates.

The fixing plate includes a transition plate and an auxiliary connecting plate arranged perpendicular to the transition plate, the auxiliary connecting plate is arranged on a plate surface of the transition plate close to the tower body, and the auxiliary connecting plate is provided with the construction hole.

The node fitting further includes a reinforcing plate, and the reinforcing plate has an end connected to a plate surface of the transition plate away from the tower body, and the other end connected to the wire attaching fitting arranged near the tower body.

Beneficial effects: in the present application, the node fitting includes the two wire attaching fittings, which can improve the load-bearing capacity of the node fitting, compress an overall size of a head of the transmission tower, reduce vertical spacing of the conductors, improve an electromagnetic environment of the transmission tower, reduce the wind load of the transmission tower, and save the manufacturing cost.

Further, in the present application, the wire attaching shaft is provided, and through rotation of the wire attaching shaft, the conductors between adjacent transmission towers can realize smooth transition.

Further, due to the arrangement of the first hinged member and the second hinged member, the composite crossarm can rotate relative to the tower body after the post insulator is broken, so that excessive unbalanced tension can be released by rotation, and the tower body is protected from damage.

### BRIEF DESCRIPTION OF THE DRAWINGS

Various other advantages and merits will become apparent to those skilled in the art by reading through the following detailed description of preferred embodiments. Figures are only intended to illustrate preferred embodiments and not construed as limiting the present application. In all figures, like reference numerals denote like parts. In the drawings:
FIG. 1 is a schematic structural diagram of a transmission tower according to an embodiment of the present application;
FIG. 2 is a schematic front structural diagram of a composite crossarm in FIG. 1;
FIG. 3 is a schematic structural diagram of a node fitting in FIG. 1;
FIG. 4 is a schematic structural diagram showing that a conductor is attached to the composite crossarm in FIG. 1;
FIG. 5 is a schematic partial enlarged diagram of region M in FIG. 4;
FIG. 6 is a schematic structural diagram showing that a conductor is attached to a composite crossarm in another embodiment of the present application;
FIG. 7 is a schematic partial enlarged diagram of region N in FIG. 6;
FIG. 8 is a schematic structural diagram of a transmission tower according to another embodiment of the present application;
FIG. 9 is a schematic partial enlarged diagram of region P in FIG. 8;
FIG. 10 is a schematic structural diagram of an arcing device in FIG. 1; and
FIG. 11 is a schematic enlarged diagram showing that the conductor is attached to the composite crossarm in FIG. 1 in another embodiment.

### DETAILED DESCRIPTION

The technical solutions in the embodiments of the present application are clearly and completely described with reference to the accompanying drawings in the embodiments of the present application, and apparently, the described embodiments are not all but only a part of the embodiments of the present application. All other embodiments obtained by a person of ordinary skill in the art based on the embodiments of the present application without creative efforts shall fall within the protection scope of the present application.

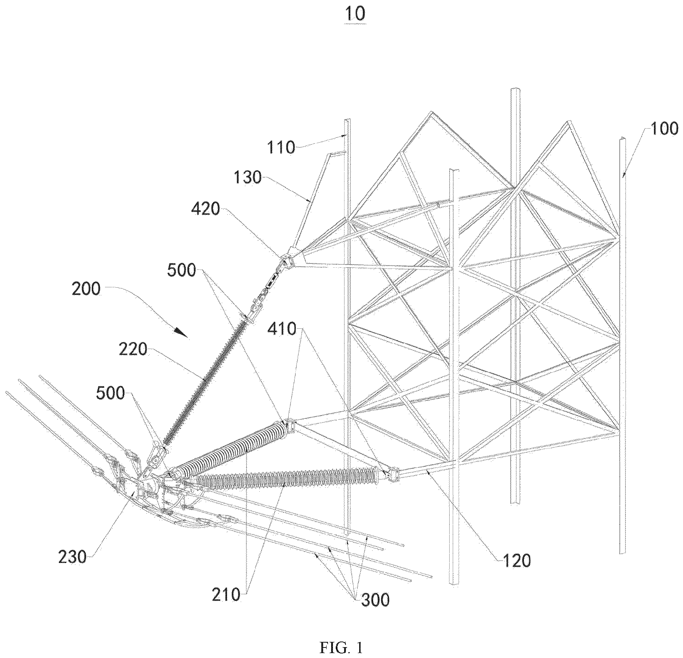

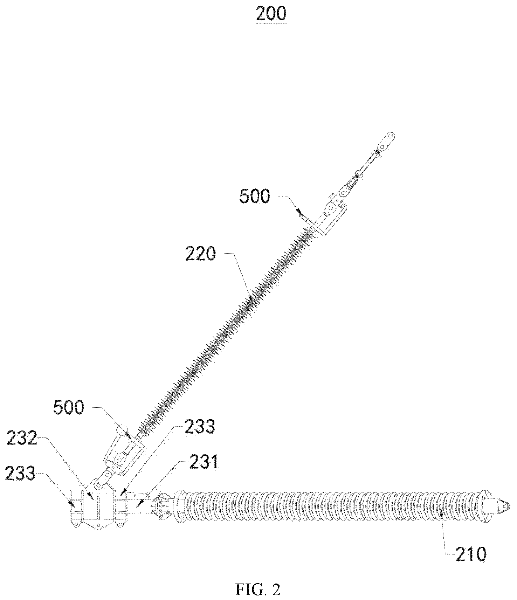

Referring to FIG. 1 and FIG. 2, the present application discloses a transmission tower 10, including a tower body 100 and a composite crossarm 200 arranged on the tower body 100. The composite crossarm 200 includes a post insulator 210, a suspension insulator 220, and a node fitting 230, a first end of the post insulator 210 and a first end of the suspension insulator 220 are connected to the tower body 100 and a second end of the post insulator 210 and a second end of the suspension insulator 220 are connected to the node fitting 230.The node fitting 230 connects the post insulator 210 and the suspension insulator 220 together to form an end portion of the composite crossarm 200 for attaching a conductor.

The tower body 100 can be a transmission tower of a common structure, such as a lattice tower, a pole or a composite pole tower. The composite crossarm 200 can be arranged on one side of the tower body 100, or the composite crossarms 200 can be arranged on plural sides of the tower body 100. One composite crossarm 200 can be arranged on one side of the tower body 100, or plural composite crossarms 200 can be arranged at intervals in a vertical direction.

The post insulator 210 includes an insulator body, an shed covering an outer circumference of the insulator body, and end portion fittings arranged at both ends of the insulator body, the insulator body is a composite insulator made by impregnating glass fibers with epoxy resin, and the shed can be made of high temperature vulcanized silicone rubber, liquid silicone rubber, room temperature vulcanized silicone rubber, or the like, which is also not limited herein. A structure and a material of the suspension insulator 220 are similar to those of the post insulator 210 and not repeated.

In an application scenario, it is provided with two post insulators 210and one suspension insulator 220 (as shown in FIG. 1). The first ends of the two post insulators 210 and the first end of the suspension insulator 220 are connected to the tower body 100, the second ends of the two post insulators 210 and the second end of the suspension insulator 220 are connected together by the node fitting 230. The two post insulators 210 are located on a same side of the tower body 100, and the suspension insulator 220 is located above the two post insulators 210. In another application scenario, it is provided with two post insulators and two suspension insulators. In still another application scenario, it is provided with one post insulator and one suspension insulator. In summary, the numbers of the post insulators 210 and the suspension insulators 220 are not limited in the present application.

Referring to FIG. 1 to FIG. 3, the node fitting 230 includes a first link fitting 231, a second link fitting 232, and two wire attaching fittings 233. Both wire attaching fittings 233 are connected to the second link fitting 232, the first link fitting 231 is connected to the second link fitting 232 through one of the wire attaching fittings 233, and the two wire attaching fittings 233 are configured to attach conductors 300. The post insulator 210 is connected to the first link fitting 231, and the suspension insulator 220 is connected to the first link fitting 231 or the second link fitting 232.

The two wire attaching fittings 233 are connected at two opposite ends of the second link fitting 232 respectively, the second link fitting 232 is configured to fix the two wire attaching fittings 233, the two wire attaching fittings 233 are configured to attach the conductors 300, for example, a four-conductor bundle in two strings, or the like. A length of the second link fitting 232 can be adjusted according to required spacing between the two wire attaching fittings 233. The first link fitting 231 is connected to one of the wire attaching fittings 233, so that the first link fitting 231, the second link fitting 232, and the two wire attaching fittings 233 are fixedly connected together.

The post insulator 210 is connected to the first link fitting 231, and the suspension insulator 220 can be connected to either the second link fitting 232 (as shown in FIG. 2) or the first link fitting 231.

In the present application, the node fitting 230 includes two wire attaching fittings 233, and the two wire attaching fittings 233 are integrated into one node fitting 230, which can reduce vertical spacing, compress an overall size of a head of the transmission tower 10, improve an electromagnetic environment of the transmission tower 10, reduce a wind load of the transmission tower 10, and save a manufacturing cost.

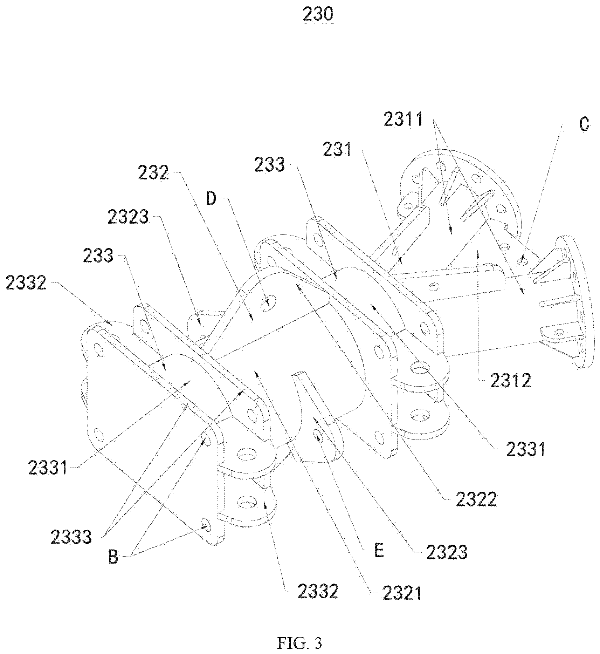

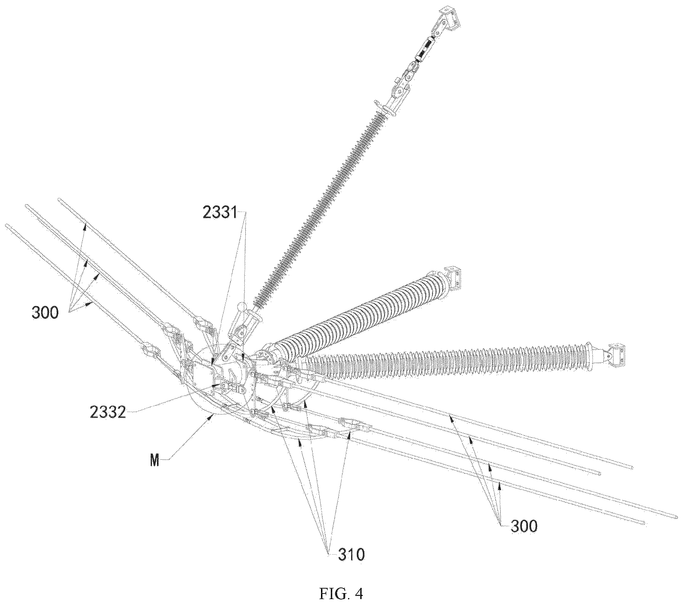

Referring to FIG. 3 and FIG. 4, the wire attaching fitting 233 includes a wire attaching flange cylinder 2331 and a wire attaching portion 2332, and the wire attaching portion 2332 is arranged on a periphery of the wire attaching flange cylinder 2331, connected to the wire attaching flange cylinder 2331 and configured to attach the conductor 300. Central axes of the wire attaching flange cylinders 2331 of the two wire attaching fittings 233 are located at a same straight line.

The wire attaching flange cylinder 2331 is axially hollow, and in the present embodiment, the wire attaching flange cylinders 2331 of the two wire attaching fittings 233 have equal diameters, which can reduce manufacturing difficulty and improve a production efficiency. In another embodiment, the diameters of the wire attaching flange cylinders of the two wire attaching fittings can also be unequal and designed according to actual mechanical strength requirements to avoid design redundancy. The central axes of the wire attaching flange cylinders 2331 of the two wire attaching fittings 233 are located at the same straight line, which can ensure that an overall structure formed by the two wire attaching flange cylinders 2331 is symmetrically arranged, thus guaranteeing balanced stressing of the conductors 300 hung on the two wire attaching fittings 233.

Referring to FIG. 3, FIG. 4, and FIG. 5, in an application scenario, the transmission tower 10 is a tension power 10, the wire attaching fitting 233 includes two wire attaching portions 2332, the two wire attaching portions 2332 are distributed on two sides of the wire attaching flange cylinder 2331 along an extension direction of the conductor 300, the conductors 300 located on the two sides of the wire attaching flange cylinder 2331 are connected to the two wire attaching portions 2332 respectively, and meanwhile, a jumper 310 is electrically connected to the conductors 300 located on the two sides of the wire attaching flange cylinder 2331.

The two wire attaching portions 2332 are distributed on the two sides of the wire attaching flange cylinder 2331 along the extension direction of the conductor 300, which can ensure that service life of the conductor 300 is not affected by angle bending; meanwhile, since both the post insulator 210 and the suspension insulator 220 are made of composite materials, the jumper 310 can be electrically connected to the conductors 300 located on the two sides of the wire attaching flange cylinder 2331 directly through the node fitting 230, which can save strain insulators and shorten a jumper system, thus avoiding wind deflection flashover.

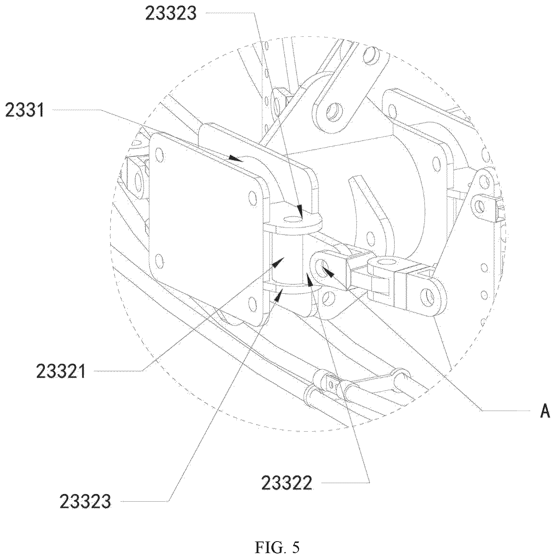

Referring to FIG. 4 and FIG. 5, the wire attaching portion 2332 includes a wire attaching shaft 23321 and a wire attaching plate 23322. The wire attaching shaft 23321 is rotatably connected to the wire attaching flange cylinder 2331; the wire attaching plate 23322 is connected to the wire attaching shaft 23321 and provided with a wire attaching hole A, a central axis of the wire attaching hole A is perpendicular to an extension direction of the wire attaching shaft 23321, and the extension direction of the wire attaching shaft 23321 is parallel to the central axis of the wire attaching shaft 23321. The extension direction of the wire attaching shaft 23321 is perpendicular to or parallel to an extension direction of the wire attaching flange cylinder 2331.

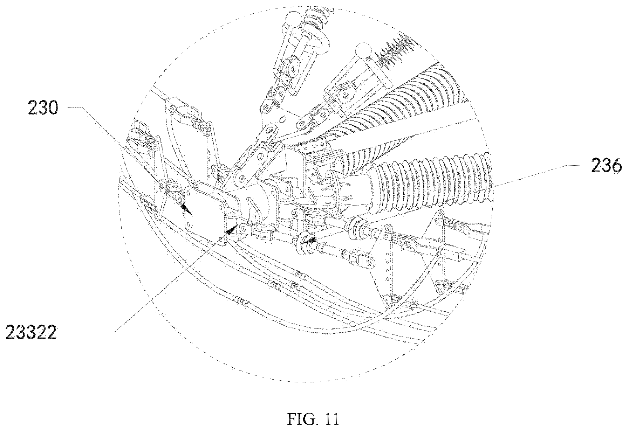

The wire attaching shaft 23321 can be rotated freely in one direction relative to the wire attaching flange cylinder 2331, the wire attaching hole A is formed in the wire attaching plate 23322, and the number of the wire attaching holes A can be one or plural. In an embodiment, as shown in FIG. 5, the wire attaching hole A is configured to be directly connected to the link fitting, such as a triangular yoke plate, or the like, to attach the conductor 300. In another embodiment, as shown in FIG. 11, the wire attaching hole A may also be connected to the link fitting, such as the triangular yoke plate, or the like, through an insulator string 236 to attach the conductor 300, and in this case, an end of the insulator string 236 is connected to the wire attaching plate 23322 of the wire attaching fitting 233, and the other end of the insulator string 236 is connected to the triangular yoke plate to attach the conductor 300. The arrangement of the insulator string 236 allows a current to be transmitted through the jumper 310 without being diverted to the node fitting 230, thus avoiding the problem of reduced service life caused by heating of the node fitting 230.

The extension direction of the wire attaching shaft 23321 is set to be perpendicular to the extension direction of the wire attaching flange cylinder 2331, so that when there exists a corner between different transmission towers, the conductor can be matched with the corner through the automatic rotation of the wire attaching shaft 23321, and the transition of the conductor between the adjacent transmission towers is smoother, thus protecting the conductor 300 and the node fitting 230. The central axis of the wire attaching hole A is perpendicular to the extension direction of the wire attaching shaft 23321, which can ensure that connection between the wire attaching shaft 23321 and the wire attaching plate 23322 cannot be affected when the wire attaching shaft 23321 rotates.

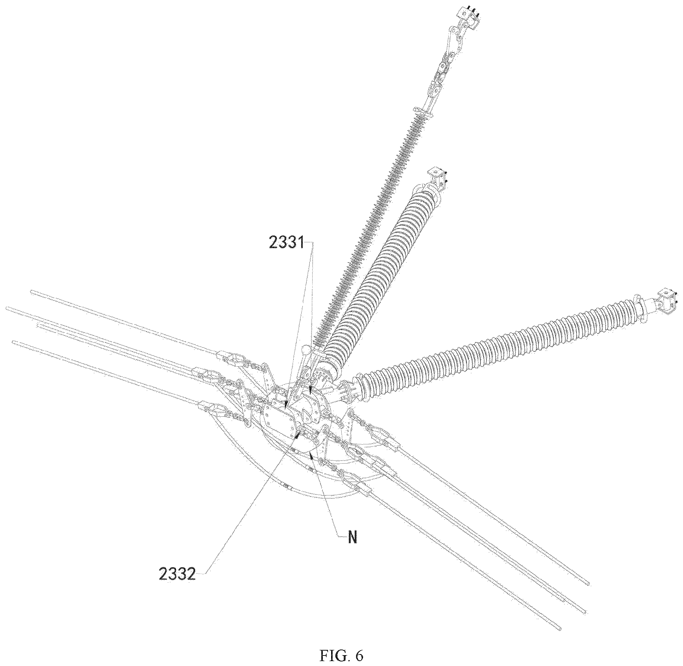

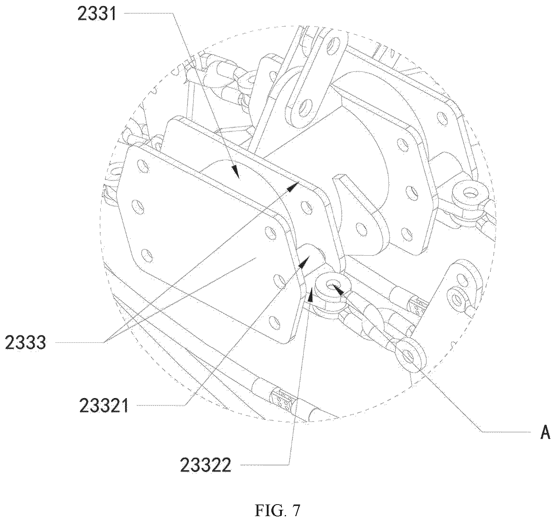

Referring to FIG. 6 and FIG. 7, different from the application scenario in FIG. 4 and FIG. 5, the extension direction of the wire attaching shaft 23321 is parallel to that of the wire attaching flange cylinder 2331, and when there exists a height difference between different transmission towers, there also exists a height difference between wire attaching points of the conductor on adjacent transmission towers, the conductor can be matched with a height of the wire attaching point through the automatic rotation of the wire attaching shaft 23321, and the conductor transition between the adjacent transmission towers is smoother, thus protecting the conductor and the node fitting. The wire attaching plate 23322 and the wire attaching hole A are also shown in FIG. 7, have effects similar to the effects in FIG. 5, and thus are not repeated herein.

The extension directions of the wire attaching shafts on the two sides of the wire attaching flange cylinder can be different or the same. For example, the extension direction of the wire attaching shaft on one side is perpendicular to the extension direction of the wire attaching flange cylinder, and the extension direction of the wire attaching shaft on the other side is parallel to the extension direction of the wire attaching flange cylinder, or the extension directions of both wire attaching shafts on the two sides are parallel or perpendicular to the extension direction of the wire attaching flange cylinder.

Referring to FIG. 5, when the extension direction of the wire attaching shaft 23321 is perpendicular to the extension direction of the wire attaching flange cylinder 2331, the wire attaching portion 2332 further includes two support plates 23323 spaced on a periphery of the wire attaching flange cylinder 2331 in a direction perpendicular to an extension direction of the wire attaching flange cylinder 2331 and connected to the wire attaching flange cylinder 2331, the wire attaching shaft 23321 is arranged between the two support plates 23323 and rotatably connected to the two support plates 23323, and the support plate 23323 is configured to further fix the wire attaching shaft 23321.

The two support plates 23323 are spaced apart, the wire attaching shaft 23321 is arranged between the two support plates 23323, and connection strength between the wire attaching shaft 23321 and the wire attaching flange cylinder 2331 can be guaranteed by supporting and limiting a position of the wire attaching shaft 23321 by the two support plates 23323; meanwhile, the two support plates 23323 can be connected to the wire attaching shaft 23321 by providing through holes, and central axes of the through holes and the central axis of the wire attaching shaft 23321 are located at a same straight line, so that a fastener can be inserted in the through holes along the central axes, so as to connect the wire attaching shaft 23321 to the two support plates 23323.

Referring to FIG. 3, the wire attaching fitting 233 further includes two sealing plates 2333. The two sealing plates 2333 seal two ends of the wire attaching flange cylinder 2331 respectively, and in a radial direction of the wire attaching flange cylinder 2331, the two sealing plates 2333 protrude from the wire attaching flange cylinder 2331, and meanwhile, the wire attaching portion 2332 is located between the two sealing plates 2333, and the sealing plate 2333 is provided with a first connecting hole B located on the periphery of the wire attaching flange cylinder 2331.

An extension surface of the sealing plate 2333 seals an end surface of the wire attaching flange cylinder 2331, which is conducive to improving the radial structural strength of the wire attaching flange cylinder 2331, thereby reducing a wall thickness of the wire attaching flange cylinder 2331, reducing a material cost, and meanwhile preventing water vapor from invading the interior of the wire attaching flange cylinder 2331. The two sealing plates 2333 both protrude from the wire attaching flange cylinder 2331, and the two ends of the wire attaching portion 2332 are connected to the two sealing plates 2333, which is conducive to improving structural strength of the wire attaching portion 2332. The wire attaching flange cylinder 2331, the two sealing plates 2333, and the wire attaching portion 2332 form an intersecting connecting structure therebetween, so as to improve structural strength in all directions. The two sealing plates 2333 can be rectangular, circular or trapezoidal, which is not limited in the present application. The sealing plate 2333 is provided with the first connecting hole B located at the periphery of the wire attaching flange cylinder 2331, the first connecting hole B can be configured for construction or connection with a shielding ring, and a specific position of the first connecting hole B is not restricted.

With continued reference to FIG. 6 and FIG. 7, the extension direction of the wire attaching shaft 23321 is parallel to the extension direction of the wire attaching flange cylinder 2331, the wire attaching shaft 23321 is arranged between the two sealing plates 2333, the two ends of the wire attaching shaft 23321 are rotatably connected to the two sealing plates 2333 respectively, and the sealing plate 2333 is configured to further fix the wire attaching shaft 23321, which is conducive to improving the overall structural strength of the wire attaching portion 2332.

Referring to FIG. 1 and FIG. 3, the number of the post insulators 210 is two, and the first link fitting 231 includes two first flange cylinders 2311 and a first connecting plate 2312. An end of one of the two first flange cylinders 2311 is connected to an end of the other of the two first flange cylinders 2311, and the two ends of the two first flange cylinders 2311 connected together are connected to one of the wire attaching fittings 233 and the other ends of the two first flange cylinders 2311 are connected to the second ends of the two post insulators 210 respectively. The first connecting plate 2312 is connected to outer circumference surfaces of the two first flange cylinders 2311.

A direction of a central axis of each of the two first flange cylinders 2311 has a certain angle with a central axis of the attaching flange cylinder 2331 of the attaching wire fitting 233, ends of the two first flange cylinders 2311 get close to each other towards the side close to the wire attaching fitting 233, so that the two first flange cylinders 2311 are combined with each other and connected to the wire attaching fitting 233, thus reducing a volume of the node fitting 230. The other ends of the two first flange cylinders 2311 are separated from each other on the side away from the wire attaching fitting 233, which can facilitate connection between the two post insulators 210 and the two first flange cylinders 2311. The first connecting plate 2312 is connected between outer circumference surfaces of the two first flange cylinders 2311, and since a distance between the two first flange cylinders 2311 is increased in the direction in which the two first flange cylinders 2311 move away from the wire attaching fitting 233, structural strength of the two first flange cylinders 2311 can be improved through the first connecting plate 2312. Preferably, the two first flange cylinders 2311 are symmetrically arranged on two sides of the central axis of the wire attaching flange cylinder 2331 of the wire attaching fitting 233, so as to ensure that an overall structure formed by the two first flange cylinders 2311 is stressed uniformly during connection to the two post insulators 210.

Referring to FIG. 3, the first connecting plate 2312 is also provided with at least one second connecting hole C, the second connecting hole C is configured to be connected with a temporary support beam during construction or mounting, the temporary support beam can reduce a force on the post insulator 210 under a mounting condition, and since the mounting condition generally occurs only once during an operation cycle and often becomes the control condition for member selection, design waste can be avoided by mounting the temporary support beam.

Alternatively, in some other embodiments, the number of the post insulators may be one, three, or the like, and correspondingly, the number of the first flange cylinders may be one, three, or the like.

Referring to FIG. 3, the second link fitting 232 includes a second flange cylinder 2321 and a second connecting plate 2322. The second flange cylinder 2321 has an end connected to one wire attaching fitting 233 and the other end connected to the other wire attaching fitting 233; and the second connecting plate 2322 is connected to an outer circumference surface of the second flange cylinder 2321.

Two ends of the second flange cylinder 2321 are connected to the wire attaching fittings 233 on two sides respectively, and spacing of the two wire attaching fittings 233 is controlled by setting a length of the second flange cylinder 2321. The second connecting plate 2322 is arranged on the outer circumference surface of the second flange cylinder 2321, which is conducive to improving structural strength of the second flange cylinder 2321. In order to further improve strength of the connecting structure, the second connecting plate 2322 can also be connected to the two wire attaching fittings 233.

Referring to FIG. 3, the second connecting plate 2322 is further provided with a third connecting hole D, and in the present embodiment, the third connecting hole D is configured to be connected to the suspension insulator, and when the number of the suspension insulators is one, the third connecting hole can be connected to the suspension insulator directly or through the link fitting; and when the number of the suspension insulators is two, the third connecting hole is connected to the two suspension insulators through the link fittings. In another embodiment, the third connecting hole D may not be configured to be connected to the suspension insulator, but serves as a construction hole.

With continued reference to FIG. 3, in a direction perpendicular to a central axis of the second flange cylinder 2321, the outer circumference surface of the second flange cylinder 2321 is provided with a construction plate 2323, the number of the construction plates 2323 may be plural, and the plural construction plates 2323 can be symmetrical about the central axis of the second flange cylinder 2321. The construction plate 2323 is provided with at least one construction hole E for maintenance and construction.

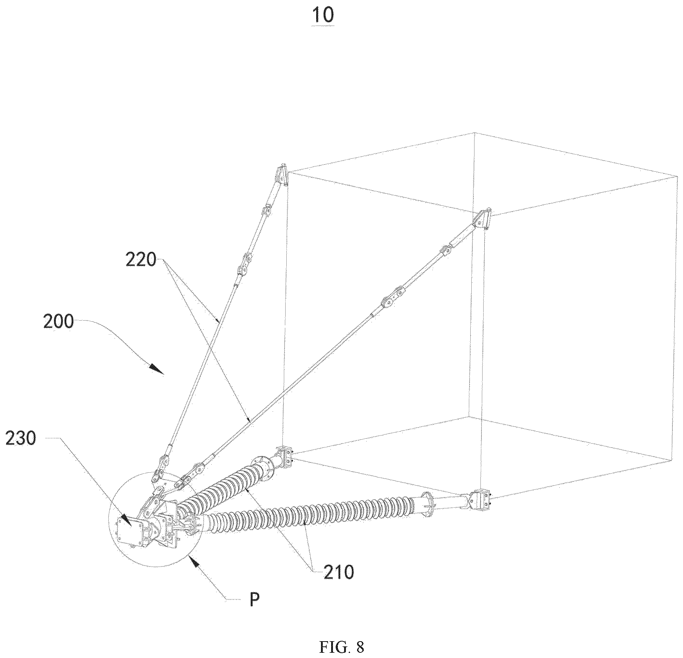

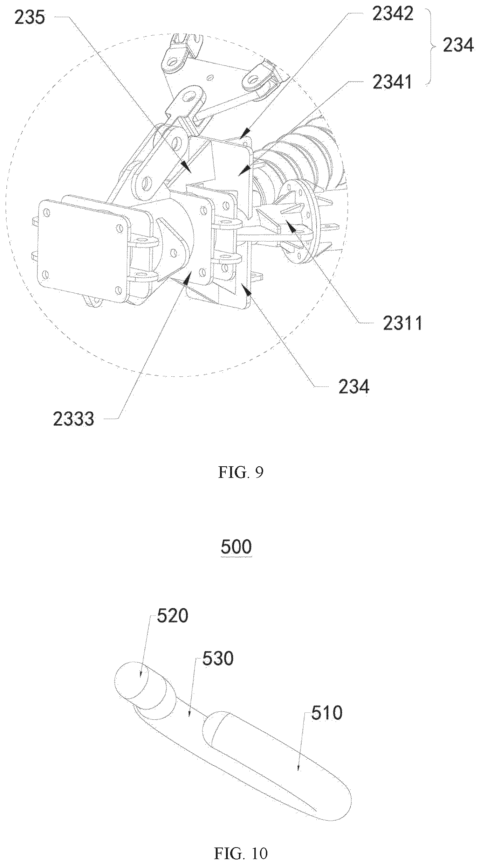

Referring to FIG. 8 and FIG. 9, in another embodiment, the construction hole may also be provided for construction or maintenance of the composite crossarm 200 by mounting a fixing plate 234 on the node fitting 230.

The node fitting 230 further includes two fixing plates 234 inserted above and below the first flange cylinder 2311 respectively, that is, the two fixing plates 234 are vertically connected to a periphery of the first flange cylinder 2311. Each fixing plate 234 includes a transition plate 2341 and an auxiliary connecting plate 2342 perpendicularly connected to the transition plate 2341, a plate surface of the transition plate 2341 is parallel to a plate surface of the sealing plate 2333 on the wire attaching fitting 233, and the auxiliary connecting plate 2342 is arranged on the plate surface of the transition plate 2341 close to the tower body 100. In the present embodiment, the number of the auxiliary connecting plates 2342 is two, and the two auxiliary connecting plates 2342 are arranged perpendicular to each other. In other embodiments, the number of the auxiliary connecting plates may be one, the auxiliary connecting plate is perpendicular to the transition plate, and in this case, the fixing plate is a plate member with a T-shaped cross section. Alternatively, as long as the auxiliary connecting plate does not interfere with the post insulator 210, the auxiliary connecting plate may be arranged at other position of the transition plate, which is not limited herein. The construction hole is formed in the auxiliary connecting plate 2342, so that other auxiliary devices for the construction or maintenance of the composite crossarm 200 are fixedly connected to the node fitting 230, which not only can ensure that other auxiliary devices do not interfere with the composite crossarm 200 when mounted on the node fitting 230, allowing for convenient and rapid mounting, but also can ensure that the entire connecting structure is in balanced force. In other embodiments, other auxiliary devices may also be connected by providing the construction hole in other components of the node fitting, which is not limited herein.

The node fitting 230 further includes a reinforcing plate 235 in an irregular shape, and the reinforcing plate 235 has an end connected to the plate surface of the transition plate 2341 away from the tower body 100 and the other end connected to the sealing plate 2333 of the wire attaching fitting 233 arranged near the tower body 100, so as to further fixedly connect the fixing plate 234 to the wire attaching fitting 233, so that a structure of the fixing plate 234 is more stable. Meanwhile, a side of the reinforcing plate 235 is connected to the wire attaching flange cylinder of the wire attaching fitting 233 arranged near the post insulator 210, and two reinforcing plates 235 are arranged and located above and below the wire attaching flange cylinder 2331 respectively.

Referring to FIG. 1, the transmission tower 10 further includes a first hinged member 410 and a second hinged member 420, and both the first hinged member 410 and the second hinged member 420 are rotatable connectors. The first hinged member 410 is configured to connect the first end of the post insulator 210 to the tower body 100, so that the post insulator 210 can rotate relative to the tower body 100; the second hinged member 420 is configured to connect the first end of the suspension insulator 200 to the tower body 100, so that the suspension insulator 220 can rotate relative to the tower body 100.

In an embodiment, when the number of the post insulators 210 is two and the number of the suspension insulators 220 is one, the two post insulators 210 and the suspension insulator 220 form a stable pyramidal structure, and meanwhile, the two post insulators 210 and the tower body 100 also form a stable triangular structure. Under normal conditions, the first hinged member 410 and the second hinged member 420 support rotation, since a structure formed by the two post insulators 210, the suspension insulator 220, and the tower body 100 is stable, the composite crossarm 200 cannot be rotated relative to the tower body 100.

When one of the post insulators 210 is broken, due to a sudden load change, the suspension insulator 220 and the remaining post insulator 210 are driven to rotate relative to the tower body 100, so as to release an unbalanced tension load through rotation and avoid complete destruction of the composite crossarm 200, so that before maintenance of the composite crossarm 200, the composite crossarm 200 can attach the conductor to prevent a greater accident.

Since the design has the effect of releasing the unbalanced tension load to a certain extent, it can be considered to reduce a design specification of the composite crossarm in the design, and compared with a fixed connection, a design for small failure load condition can be adopted for the specification of the composite crossarm in the present application, so as to reduce a manufacturing cost.

Meanwhile, in the prior art, the post insulator 210 is usually connected to the tower body 100 in the form of a lap plate (including an insertion plate, or the like), the connection is actually between a fixed connection and a hinged connection, but in corresponding pressing stability calculation, for security reasons, the connection is often assumed as a hinged connection, and a boundary condition for the hinged connection is used, resulting in design redundancy. In the design of the present application, the connection between the post insulator 210 and the tower body 100, and the connection between the suspension insulator 220 and the tower body 100 are hinged connections, which is consistent with the boundary condition assumed in a stability calculation formula and can avoid the design redundancy.

It should be noted that although the above description is given with the embodiment with two post insulators 210 and one suspension insulator 220, the above description is also applicable to the embodiment with two post insulators 210 and two suspension insulators 220.

In some other embodiments, the composite crossarm and the tower body may also be connected by a fixed connector, and in this case, neither the post insulator nor the suspension insulator can rotate relative to the tower body.

Referring to FIG. 1, the tower body 100 includes a tower main body 110, a first support frame 120, and a second support frame 130. The first support frame 120 and the second support frame 130 are convexly arranged on a same side wall of the tower main body 110, the first support frame 120 is connected to the first end of the post insulator 210, and the second support frame 130 is connected to the first end of the suspension insulator 220.

The first support frame 120 can be designed adaptively according to a relative position and angle between the post insulator 210 and the tower body 100, and the second support frame 130 can be designed adaptively according to a relative position and angle between the suspension insulator 220 and the tower body 100.

Due to the arrangement of the first support frame 120 and the second support frame 130, on the one hand, the composite crossarm 200 and the tower body 100 can be conveniently and efficiently maintained; on the other hand, when plural composite crossarms 200 are arranged on the tower body 100, since a distance between the composite crossarm 200 and the tower body 100 can be adjusted by the first support frame 120 and the second support frame 130, sizes of the plural composite crossarms 200 can be consistent, thereby improving a production efficiency.

In some other embodiments, the first support frame and the second support frame can be omitted, and the post insulator and the suspension insulator can be directly mounted on the tower body. Alternatively, only the first support frame is mounted, the second support frame is omitted, and in this case, the post insulator is connected to the first support frame, and the suspension insulator is mounted directly on the tower body, which is not limited herein.

Referring to FIG. 1 and FIG. 8, the transmission tower 10 includes at least one arcing device 500, each arcing device 500 includes an arcing ring 510 and an arcing end 520, and the arcing ring 510 is provided with a notch 530, so that the arcing ring 510 has two end portions; the arcing end 520 is located at one of the end portions of the arcing ring 510, and the arcing end 520 bends in a direction away from the arcing ring 510. The arcing end 520 is an arcing ball or arcing bar with a smooth surface.

The arching devices 500 can be selectively mounted on both ends of the post insulator 210 and the suspension insulator 220 for arching, so as to protect the composite crossarm 200. The arcing ring 510 is provided with the notch 530, so that on the one hand, materials can be saved, and on the other hand, the arcing end 520 can be prevented from contacting the arcing ring 510, and an arcing initiation effect of the arcing end 520 can be guaranteed; meanwhile, the arcing end 520 bends in the direction away from the arcing ring 510, which can further improve the arcing initiation effect of the arcing end 520.

Finally, it should be noted that the above embodiments are only used to illustrate the technical solutions of the present application, not to limit the present application; although the present application is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present application, and all of them should be included in the scope of the claims and description of the present application. Particularly, as long as structural conflicts do not exist, all technical features mentioned in all the embodiments may be combined together in any mode. The present application is not limited to the specific embodiments disclosed in the description, but includes all technical solutions falling into the scope of the claims.

## Claims

1. A transmission tower, comprising a tower body and a composite crossarm arranged on the tower body, wherein the composite crossarm comprises a post insulator, a suspension insulator, and a node fitting, the post insulator has a first end connected to the tower body and a second end, the suspension insulator has a first end connected to the tower body and a second end, the second end of the post insulator and the second end of the suspension insulator are connected together by the node fitting, and the node fitting comprises:
a first link fitting;
a second link fitting; and
two wire attaching fittings connected at two opposite ends of the second link fitting respectively, the first link fitting is connected to the second link fitting through one of the two wire attaching fittings, and the two wire attaching fittings are configured to attach conductors,
the post insulator is connected to the first link fitting, and the suspension insulator is connected to the first link fitting or the second link fitting.

2. The transmission tower according to claim 1,
wherein the wire attaching fitting comprises a wire attaching flange cylinder and a wire attaching portion, the wire attaching portion is arranged on a periphery of the wire attaching flange cylinder and connected to the wire attaching flange cylinder, and central axes of the wire attaching flange cylinders of the two wire attaching fittings are located in a same straight line.

3. The transmission tower according to claim 2,
wherein the wire attaching fitting comprises two wire attaching portions, the two wire attaching portions are distributed on two sides of the wire attaching flange cylinder along an extension direction of the conductor, the conductors located on the two sides of the wire attaching flange cylinder are connected to the two wire attaching portions respectively, and a jumper is electrically connected to the conductors located on the two sides of the wire attaching flange cylinder.

4. The transmission tower according to claim 2,
wherein the wire attaching portion comprises:
a wire attaching shaft rotatably connected to the wire attaching flange cylinder; and
a wire attaching plate connected to the wire attaching shaft and provided with a wire attaching hole, a central axis of the wire attaching hole being perpendicular to an extension direction of the wire attaching shaft.

5. The transmission tower according to claim 4,
wherein the extension direction of the wire attaching shaft is perpendicular to an extension direction of the wire attaching flange cylinder, and the wire attaching portion further comprises: two support plates spaced on a periphery of the wire attaching flange cylinder along a direction perpendicular to the extension direction of the wire attaching flange cylinder and connected to the wire attaching flange cylinder, and the wire attaching shaft is arranged between the two support plates and rotatably connected to the two support plates.

6. The transmission tower according to claim 4,
wherein the wire attaching fitting further comprises:
two sealing plates, the two sealing plates seal two ends of the wire attaching flange cylinder respectively, and in a radial direction of the wire attaching flange cylinder, the two sealing plates protrude from the wire attaching flange cylinder, and the wire attaching portion is located between the two sealing plates, and the sealing plate is provided with a first connecting hole located on the periphery of the wire attaching flange cylinder.

7. The transmission tower according to claim 6,
wherein the extension direction of the wire attaching shaft is parallel to an extension direction of the wire attaching flange cylinder, and two ends of the wire attaching shaft are rotatably connected to the two sealing plates.

8. The transmission tower according to claim 1,
wherein the number of the post insulators is two, and the first link fitting comprises:
two first flange cylinders, wherein an end of one of the two first flange cylinders is connected to an end of the other of the two first flange cylinders, two ends of the two first flange cylinders connected together are connected to one of the wire attaching fittings, and the other ends of the two first flange cylinders are connected to the second ends of the two post insulators respectively; and
a first connecting plate connected to outer circumference surfaces of the two first flange cylinders.

9. The transmission tower according to claim 1,
wherein the second link fitting comprises:
a second flange cylinder having an end connected to one wire attaching fitting and the other end connected to the other wire attaching fitting; and
a second connecting plate connected to an outer circumference surface of the second flange cylinder.

10. The transmission tower according to claim 1,
wherein the transmission tower further comprises:
a first hinged member configured to connect the first end of the post insulator to the tower body, so that the post insulator is rotatable relative to the tower body; and
a second hinged member configured to connect the first end of the suspension insulator to the tower body, so that the suspension insulator is rotatable relative to the tower body.

11. The transmission tower according to claim 1,
wherein the tower body comprises:
a tower main body;
a first support frame; and
a second support frame,
wherein the first support frame and the second support frame are convexly arranged on a same side wall of the tower main body, the first support frame is connected to the first end of the post insulator, and the second support frame is connected to the first end of the suspension insulator.

12. The transmission tower according to claim 1,
wherein the transmission tower comprises at least one arcing device, each arcing device comprises an arcing ring and an arcing end, and the arcing ring is provided with a notch, so that the arcing ring has two end portions, the arcing end is located at one of the end portions of the arcing ring, and the arcing end bends in a direction away from the arcing ring.

13. The transmission tower according to claim 8,
wherein the node fitting further comprises two fixing plates inserted in the first flange cylinder, and protruding above and below the first flange cylinder respectively, and a construction hole is formed in each of the two fixing plates.

14. The transmission tower according to claim 13,
wherein the fixing plate comprises a transition plate and an auxiliary connecting plate arranged perpendicular to the transition plate, the auxiliary connecting plate is arranged on a plate surface of the transition plate close to the tower body, and the auxiliary connecting plate is provided with a construction hole.

15. The transmission tower according to claim 14,
wherein the node fitting further comprises a reinforcing plate, and the reinforcing plate has an end connected to a plate surface of the transition plate away from the tower body, and the other end connected to the wire attaching fitting arranged near the tower body.
